**Europäisches Patentamt**

**European Patent Office**

**Office européen des brevets**

(19)

(11) Veröffentlichungsnummer : **0 330 619 B1**

(12) **EUROPÄISCHE PATENTSCHRIFT**

(45) Veröffentlichungstag der Patentschrift :
09.06.93 Patentblatt 93/23

(51) Int. Cl.⁵ : **C04B 35/00, C08F 299/04, C08F 299/06, C08F 283/01**

(21) Anmeldenummer : **89810131.6**

(22) Anmeldetag : **17.02.89**

(54) **UV-härtbare Bindemittel für keramische Überzüge.**

(30) Priorität : 26.02.88 US 160740

(43) Veröffentlichungstag der Anmeldung :
30.08.89 Patentblatt 89/35

(45) Bekanntmachung des Hinweises auf die
Patenterteilung :
09.06.93 Patentblatt 93/23

(84) Benannte Vertragsstaaten :
BE DE ES FR GB IT NL

(56) Entgegenhaltungen :
EP-A- 0 130 031

(56) Entgegenhaltungen :
US-A- 4 649 062
DATABASE WPIL, Nr. 88-068954 [10], Derwent
Publications Ltd, Londen, GB; & JP-A-63 025
260 (NITTO ELECTRIC)
DATABASE WPIL, Nr. 87-105509 [15], Derwent
Publications Ltd, Londen, GB; & JP-A-62 053
379 (KOEI CHEM.) 09-03-1987

(73) Patentinhaber : CIBA-GEIGY AG
Klybeckstrasse 141
CH-4002 Basel (CH)

(72) Erfinder : Kraushaar, Douglas J.
349 East Maiden Street
Washington Pennsylvania 15301 (US)

EP 0 330 619 B1

## Beschreibung

Die Erfindung betrifft UV-härtbare organische Bindemittel für keramische Ueberzüge (Emaillen), welche durch UV-Bestrahlung gehärtet werden können. Die so gehärteten Ueberzüge können auf hitzebeständigen Substraten, wie z.B. Glas, Metall oder Keramik, eingebrannt werden, wobei das organische Material verbrennt und eine Glasur hinterbleibt, die fest auf dem Substrat haftet.

Konventionelle Emaillen benutzen Bindemittel, die meist ölig sind und vor dem Auftrag einer zweiten Schicht zwischengetrocknet werden müssen. Oft wird hierfür Infrarotheizung verwendet, aber diese ist langsam, teuer und verbraucht viel Energie. Konventionelle Ueberzüge enthalten auch einen hohen Anteil an Lösungsmitteln, welche bei der Trocknung des Ueberzuges verdampft werden müssen, aber das ist nicht umweltfreundlich und führt zu Gesundheitsrisiken.

Eine neuere Entwicklung ist im US-A 4 306 012 beschrieben. Dabei wird als Bindemittel eine lösungsmittelfreie Kombination von Prepolymeren mit Acrylat- oder Methacrylat-Endgruppen und von monomeren Acrylaten bzw. Methacrylaten verwendet, die mit Polymerisationsinhibitoren stabilisiert ist. Die Härtung geschieht entweder durch Elektronenstrahlen oder, nach Zusatz eines Photoinitiators, durch UV-Bestrahlung. Wenn jedoch solche Ueberzüge durch Siebdruck-Technik aufgetragen werden, werden die Filme zu dünn und es bilden sich beim Einbrennen kleine Löcher (pin-holes). Schwierigkeiten treten weiterhin auf bei der UV-Härtung von dicken und hoch-pigmentierten Ueberzügen, die dabei oft nur oberflächlich gehärtet werden. Schwierigkeiten treten auch beim Ueberdrucken auf, wenn man nicht sehr sorgfältig ist bei der Auswahl der Komponenten. Unter Ueberdrucken versteht man das Aufbringen mehrerer Schichten mit Zwischenhärtung der einzelnen Schichten und gemeinsamem Einbrennen.

Andere photohärtbare Bindemittel wurden z.B. im US-A 4 072 592 aufgezeigt. Dabei wird ein Addukt von Acrylsäure an Epoxyharz mit einem monomeren Acrylat gemischt. Diese Bindemittelsysteme werden jedoch nicht für Glasfritten verwendet. Aehnliche Ueberzüge sind im US-A 4 070 262 und 4 071 425 beschrieben, während im US-A 4 319 811 Ueberzüge beschrieben werden, deren Komponenten N-Vinylimide sind.

Weitere strahlenhärtbare keramische Farbüberzüge sind in den US-A 4 390 565 und 4 649 062 beschrieben. Der erstere Ueberzug ist gekennzeichnet durch die Anwesenheit von mindestens einem acrylierten Polycaprolactondiol-Polyurethan. Der letztere Typ stellt ein Mehrkomponenten-Gemisch dar aus Acrylat- oder Methacrylat-modifizierten Oligomeren, Acrylat- oder Methacrylat-Monomeren, Photoinitiatoren und einem Polymerisationsinhibitor. Obwohl das letztere System gewisse Vorteile in der Anwendung hat, sind weiterhin zusätzliche Verbesserungen im Hinblick auf Rheologie, Feuchtigkeitsresistenz, Ueberdruckbarkeit und Flexibilität erwünscht.

Es wurde nun ein verbesserter Typ von Bindemittel für keramische Ueberzüge erfunden, der für das Siebdruckverfahren brauchbar ist. Das Bindemittel ist ausgewogen in Hinblick auf die Vernetzungsdichte der oligomeren Komponenten, in Hinblick auf die Funktionalität der monomeren Komponenten und in Hinblick auf die Durchhärtung. Ein weiterer Gegenstand der Erfindung sind druckfähige Ueberzüge aus den neuen Bindemitteln und der Emaille, d.h. der keramischen Fritte und dem Pigment. Ein weiterer Gegenstand der Erfindung ist ein Verfahren zum Bedrucken eines hitzebeständigen Substrates mit einem Ueberzug, der das neue Bindemittel enthält. Mit der neuen Erfindung sind hohe Härtungsgeschwindigkeiten möglich, mit einigen Farben bis zu 3 m/min, und das bedeutet reduzierte Energiekosten und verbesserte Stapelfähigkeit. Hochpigmentierte Ueberzüge mit hoher Nass-Schichtdicke können verarbeitet werden wegen der hervorragenden Durchhärtung der Ueberzüge. Im Gegensatz zu üblichen Bindemitteln brennen die erfindungsgeässen Bindemittel gut aus, sodass nach dem Einbrennen glatte Glasuren entstehen, die frei von pin-holes sind. Die erfindungsgemässen Ueberzüge können mit den verschiedensten Farben verwendet werden, auch mit Weiss und Schwarz, ohne dass der Photoinitiator oder das Bindemittel verändert werden muss, und sie eignen sich auch für Mehrfarben-Applikationen.

Das erfindungsgemässe Bindemittelsystem hat gegenüber bekannten Systemen folgende Vorteile:

(a) Anwendbarkeit in dicken Schichten, wobei andere Bindemittel weder durchhärten noch ausbrennen;

(b) Anwendbarkeit im Mehrfach-Druck, speziell auf Grund der Möglichkeit des unmittelbaren Ueberdruckens ohne Zeitverlust und ohne Verschlechterung der Haftung;

(c) Anwendbarkeit in Ueberdruck-Techniken, beispielsweise beim Ueberdrucken mit einer elektrisch leitfähigen Schicht;

(d) reduzierte rheologische Empfindlichkeit gegenüber Feuchtigkeit der Umgebung;

(e) Anwendbarkeit mit einer Vielzahl keramischer Fritten und Pigmente;

(f) Verträglichkeit mit verschiedenen Formtrennmitteln, wie sie bei Glas-Beschichtungen zugesetzt werden.

Gegenstand der Erfindung sind UV-härtbare Bindemittel für keramische Ueberzüge, wobei das Bindemittel folgende Komponenten enthält:

2

(a) mindestens zwei photopolymerisierbare flüssige Oligomere, die funktionelle Acrylat- oder Methacrylat-Endgruppen enthalten und wovon mindestens eines ein di- oder trifunktionelles Polyesteracrylat oder -methacrylat ist und mindestens ein di- oder trifunktionelles Polyurethanacrylat oder -methacrylat ist;

(b) mindestens ein monomeres Monoacrylat oder Monomethacrylat;

(c) mindestens ein aliphatisches Pentaacrylat oder Pentamethacrylat; und

(d) eine wirksame Menge eines Photoinitiatorsystems aus einem substituierten Thioxanthon, einer Aminverbindung und einem Acetophenon-Derivat.

Bevorzugt enthält das Bindemittel als Komponente (a) ein Gemisch eines di- oder trifunktionellen Polyester-acrylates mit einem di- oder trifunktionellen Polyurethan-acrylat, und als Komponente (d) ein Gemisch eines substituierten Thioxanthons mit einem Ester einer Aminobenzoesäure und mit einer 2-Phenylacetophenon-Verbindung.

Bevorzugt enthält das Bindemittel 1-25 Gew.-% eines Polyesteracrylates, 1-25 Gew.-% eines Polyurethan-acrylates, 10-50 Gew.-% der Komponente (b), 1-35 Gew.-% der Komponente (c), 0,5-5 Gew.-% eines substituierten Thioxanthons, 0,5-5 Gew.-% eines Esters einer Aminobenzoesäure und 0,5-15 Gew.-% einer 2-Phenylacetophenon-Verbindung.

Besonders bevorzugt enthält das Bindemittel als Komponente (a) ein Gemisch eines di- oder trifunktionellen Polyester-acrylates mit einem di- oder trifunktionellen Polyurethan-acrylat, als Komponente (b) 2-Phenoxy-ethyl-acrylat, als Komponente (c) Dipentaerythrit-pentaacrylat und als Komponente (d) ein Gemisch von 2-Isopropylthioxanthon, Ethyl-4-dimethyl-aminobenzoat und 2,2-Dimethoxy-2-phenylacetophenon.

Gegenstand der Erfindung sind ferner UV-härtbare Ueberzugsmassen enthaltend ein wie oben definiertes Bindemittel und eine Glas-Emaille bei einem Gewichtsverhältnis von 1:2-5,5, insbesondere von 1:4. Die Glas-Emaille enthält ein anorganisches Farbpigment, vorzugsweise ein Gemisch von Metalloxiden.

Gegenstand der Erfindung ist ferner ein Verfahren zum Beschichten eines hitzebeständigen Substrates mit einer keramischen Glasur, bestehend aus den Verfahrensschritten

(1) Auftrag einer wie oben definierten UV-härtbaren Ueberzugsmasse enthaltend eine Glas-Emaille und das Bindemittel dafür, auf das hitzebeständige Substrat,

(2) Härtung des Ueberzuges durch UV-Bestrahlung und

(3) Einbrennen des beschichteten Substrates bei einer Temperatur, die ausreicht um das Bindemittel abzubrennen und die Emaille auf das Substrat aufschmelzen zu lassen.

Die Komponente (a) ist ein wohlausgewogenes Gemisch von mindestens 2 flüssigen Oligomeren. Das oligomere di- oder trifunktionelle Polyester-acrylat oder -methacrylat hat vorzugsweise ein Molekulargewicht von 15.000 bis 80.000 und eine aliphatische oder aromatische Hauptkette. Es hat pro Molekül zwei oder drei Acrylat- bzw. Methacrylatgruppen. Ein typisches Polyester-acrylat ist das ZL-1178 der Morton Thiokol Inc.

Das Polyurethan-acrylat bzw. -methacrylat hat eine aromatische oder aliphatische Hauptkette, hat 2 bis 3 Acrylat- bzw. Methacrylat-End-gruppen, ein Molekulargewicht von 100 bis 2500, vorzugsweise 1000-2500, und eine Viskosität von 20 bis über 200 Poise. Geeignete Handelsprodukte sind Ebecryl® 264 von Virginia Chemicals Inc. oder Uvithane® 782 von Morton Thiokol Inc.

Die Komponente (b) ist ein monomeres Monoacrylat bzw. Monomethacrylat. Beispiele hierfür sind Allyl-(meth)acrylat, Tetrahydrofuryl(meth)acrylat, Cyclohexyl(meth)acrylat, n-Hexylmethacrylat, Lauryl(meth) acrylat, 2-Ethoxyehtylacrylat, 2-Phenoxyethylacrylat, Glycidyl(meth)acrylat oder ein acryliertes Methylolmelamin. Bevorzugt ist (b) 2-Phenoxyethylacrylat, wie es als Handelprodukt Sartomer® 339 von Sartomer Co. erhältlich ist.

Beispiele für aliphatische Pentaacrylate oder Pentamethacrylate sind Dipentaerythrit-pentacrylat und das entsprechende Pentamethacrylat.

Das Bindemittel kann ferner di- und trifunktionelle Acrylate oder Methacrylate enthalten, wie z.B. Butandiol-diacrylat oder Trimethylol-propan-triacrylat.

Die Photoinitiator-Kombination (d) enthält ein Acetophenon-Derivat. Beispiele hierfür sind 2,2-Diethoxyacetophenon, 2,2-Dimethoxy-2-phenylacetophenon, Di- oder Trichloracetophenon, 2-Hydroxy-2,2-dimethylacetophenon, Benzoin-alkylether oder 1-Benzoylcyclohexanol. Bevorzugt ist 2,2-Dimethoxy-2-phenylacetophenon, das als Handelsprodukt Irgacure® 651 von Ciba-Geigy AG erhältlich ist.

Die zweite Komponente von (d) ist ein substituiertes Thioxanthon, das die Durchhärtung des Bindemittels beschleunigt. Beispiele hierfür sind 2-Chlorthioxanthon, 2-Isopropylthioxanthon, 2-Methylthioxanthon, 2-Decylthioxanthon oder das 2-Dodecylthioxanthon. Bevorzugt ist das 2-Isopropylthioxanthon, das als Handelsprodukt Quantacure® ITX von Aceto Chemicals Co. erhältlich ist.

Die Aminverbindung ist wichtig zur Einstellung eines Gleichgewichtes zwischen Oberflächenhärtung und Durchhärtung. Hierfür verwendet man vor allem Ester von Aminobenzoesäuren oder tertiäre Amine. Beispiele hierfür sind die Methyl- oder Ethylester von 4-Dimethylaminobenzoesäure oder von 2-Dimethylaminopropionsäure oder Dimethylethanolamin.

Das erfindungsgemässe Bindemittel kann ferner ein Verlaufhilfsmittel enthalten. Dieses muss mit den anderen Komponenten des Bindemittels gut verträglich sein und muss beim Einbrennen restlos ausbrennen. Bevorzugt verwendet man hierfür flüssige polymerisierte Olefine, insbesondere Polybuten. Ein handelsübliches Produkt ist das Indopol® L-24 der Amoco Chemicals, das ein viskoses Polybuten ist. Andere brauchbare Verlaufshilfmittel sind solche auf Basis von Silikonölen.

Das erfindungsgemässe Bindemittel enthält (in Gew.-%)

```
1-25 %, bevorzugt  10-20 % Polyesteracrylat (a)
  1-25 %, bevorzugt   3-20 % Polyurethanacrylat (a)
 10-50 %, bevorzugt  35-48 % Monoacrylat (b)
  1-35 %, bevorzugt   8-22 % Pentaacrylat (c)
0,5- 5 %, bevorzugt   3- 4 % Thioxanthon (d)
0,5- 5 %, bevorzugt   2- 3 % Aminverbindung (d)
0,5-15 %, bevorzugt   5- 8 % Acetophenon (d)
   0- 5 %, bevorzugt 0,5- 2 % Verlaufshilfsmittel
```

Bei der Formulierung der erfindungsgemässen Ueberzüge werden übliche keramische Komponenten mit den oben beschriebenen neuen Bindemitteln gemischt. Die Mischung erfolgt im Verhältnis Bindemittel:Glasemaille von 1:2-5,5, vorzugsweise 1:2,5-4. Die Glasemaille wird in Form von unpigmentierten oder pigmentierten keramischen Fritten verwendet. Keramische Fritten sind unregelmässig geformte Teilchen aus Spezialgläsern mit einem Durchmesser von etwa 2-40 $\mu$m. Die darin enthaltenen Pigmente sind hochtemperaturbeständige anorganische Pigmente. Beispiele hierfür sind Eisenoxid, Titandioxid, Chromoxid, Zinnoxid, Magnesiumoxid, Aluminiumoxid, Cobaltoxid oder Cadmiumoxid.

Das Aufbringen der Ueberzüge auf die Substrate geschieht nach üblicher Technik, beispielsweise wie im US-A 4 649 062 beschrieben. Vorzugsweise erfolgt der Auftrag durch ein Sieb. Der Ueberzug soll auf dem Substrat einen Film bilden, der bei Raumtemperatur nicht rinnt. Der Ueberzug wird dann einer UV-Bestrahlung unterworfen wobei das Bindemittel aushärtet. Die Strahlung soll eine Leistung von 0,1 bis 100 Watt/cm$^2$ haben. Nach der Bestrahlung hat der Film eine formbeständige feste Konsistenz. Er kann z.B. mit dem Daumen nicht verwischt werden. Dadurch ist ein Stapeln und/oder Lagern der so beschichteten Gegenstände möglich.

Das Einbrennen erfolgt nachher bei einer Temperatur von 535 bis 760°C, je nach der Art des Substrates. Dabei soll das Bindemittel restlos ausbrennen, im Idealfall bereits bei 510-595°C. Beim Einbrennen schmilzt die Fritte und bildet eine fest haftende Glasur. Wenn das Bindemittel nicht vor Bildung der Glasur restlos ausbrennt, bleibt in der Glasur Asche zurück und trübt die Glasur. Die erfindungsgemässen Bindemittel erfüllen in dieser Hinsicht die Erwartungen und man erhält eine klare Glasur.

Im US-A 4 684 388 werden Formtrenn-Zusätze empfohlen für die Beschichtung von Glas mit anschliessender Verformung des Glases. Solche Zusätze können die vorzeitige Polymerisation von UV-härtbaren Bindemitteln bewirken. Dies ist aber bei den erfindungsgemässen Bindemitteln nicht der Fall. Vielmehr sind sie verträglich mit den meisten Formtrenn-Zusätzen und sind voll einsetzbar im Verfahren der erwähnten Patentschrift.

Die folgenden Beispiele illustrieren die Erfindung näher. Darin sind alle Teile Gewichtsteile, soweit nicht anders erwähnt.

Beispiel 1:

Ein UV-härtbares Bindemittel wird bereitet durch Mischen der folgenden Bestandteile:
(1) 14,93 Teile eines flüssigen Polyesters mit endständigen Acrylatgruppen (ZL 1178, Morton Thiokol Inc.)
(2) 4,98 Teile eines Polyesterurethan-acrylates (Uvithane® 782, Morton Thiokol Inc.)
(3) 45,76 Teile 2-Phenoxyethyl-acrylat
(4) 20,24 Teile Dipentaerythrit-pentaacrylat
(5) 4,03 Teile 2-Isopropylthioxanthon
(6) 2,50 Teile 4-Dimethylaminobenzoesäure-ethylester
(7) 7,06 Teile 2,2-Dimethoxy-2-phenylacetophenon
(8) 0,50 Teile eines flüssigen Polybutens (Indopol® L-14, Amoco Chemicals).
Das Mischen geschieht unter leichtem Erwärmen und Rühren. Die resultierende Mischung Nr. 1 ist eine

4

Flüssigkeit mit einer Viskosität von 242 Centipoise, gemessen in einem Brookfield-Viskosimeter bei 24°C und mit einer Spindel Nr. 27 bei 100 U/min.

Beispiel 2:

In Analogie zu Beispiel 1 werden die folgenden Mischungen Nr. 2, 3 und 4 bereitet.

| Komponente | Teile | | |
|---|---|---|---|
| | Nr. 2 | Nr. 2 | Nr. 4 |
| (1) | 15,00 | 15,00 | 14,85 |
| (2) | 5,00 | 5,00 | 4,95 |
| (3) | 45,99 | 45,99 | 45,53 |
| (4) | 20,34 | 20,34 | 20,14 |
| (5) | 4,05 | 4,05 | 4,00 |
| (6) | 2,52 | 2,52 | 2,50 |
| (7) | 7,10 | -- | 7,03 |
| (8) | -- | -- | 1,00 |
| (9) *) | -- | 7,10 | -- |

*) (9) = 2-Methyl-2-morpholino-1-(4-methylthiophenyl)-propanon-1

Beispiel 3:

Eine schwarze Farbfritte, wie sie für getönte Windschutzscheiben benutzt wird, wird mit den in den Beispielen 1 und 2 beschriebenen Bindemittelmischungen im Gewichtverhältnis 4:1 gemischt und auf einem 3-Walzen-Mischer homogenisiert. Man erhält lagerstabile Ueberzugsmassen.

Diese werden auf Glasplatten aufgetragen durch ein Sieb mit 200 Maschen auf eine Fläche von 7,6x7,6 cm in einer Schichtdicke von etwa 40 μm. Die beschichteten Glasplatten werden in einer Fusion Systems Bestrahlungsapparatur mit einer Hg-Lampe von 118 W/cm bei Durchlaufgeschwindigkeiten von 0,6, 1,2 und 1,8 m/min bestrahlt. Dabei entsteht eine wischfeste Oberfläche. Dann werden die Proben in einem Ofen bei 705°C für 3 Minuten eingebrannt. Dabei verbrennt das organische Bindemittel restlos und die Fritte schmilzt zu einer glatten und glänzenden Glasur, die fest auf der Glasplatte haftet. Die Proben werden beurteilt auf die Fliesseigenschaft, Härtung nach der Bestrahlung, Anzeichen von Lochbildung und Anzeichen von Ablösung.

Ausserdem werden die Proben auf Ueberdruckbarkeit getestet. Dazu werden zwei verschiedene Druckmedien verwendet, einmal ein üblicher siebdruckfähiger, stromleitender Ueberzug auf Basis einer niedrigschmelzenden Glasfritte, z.B. ein Borsilikatglas, und eines Metallpulvers, z.B. Silberpulvers, in leitfähiger Menge, dispergiert in einem Terpentinöl als Bindemittel, und zum anderen einen schwarz pigmentieren Ueberzug wie einleitend beschrieben. Die schwarze Ueberzugsmasse wird erst auf Glas siebgedruckt und UV-gehärtet, dann wird eine zweite Schicht übergedruckt und das Zweischichtsystem gemeinsam 3 Minuten bei 705°C eingebrannt. Beurteilt wird die Adhäsion der Schichten sowie die Bildung grauer Farbschleier.

| Bindemittel | Nr. 1 | Nr. 2 | Nr. 3 | Nr. 4 |
|---|---|---|---|---|
| Fliesseigenschaft | s.g. | s.g. | s.g. | s.g. |
| Härtung bei 0,6 m/min | s.g. | s.g. | s.g. | s.g. |
| Härtung bei 1,2 m/min | s.g. | s.g. | s.g. | s.g. |
| Härtung bei 1,8 m/min | s.g. | s.g. | s.g. | s.g. |
| Lochbildung | keine | keine | leicht | keine |
| Ausbrennen des Bindemittels | kompl. | kompl. | koml. | kompl. |
| Ablösung | keine | keine | keine | keine |
| Ueberdruckbarkeit | s.g. | s.g. | s.g. | s.g. |
| Vergrauung | keine | leicht | mässig | keine |

s.g. = sehr gut

kompl. = komplett

Beispiel 4:

Die Probe Nr. 3 des Beispiels 3 wird nach der Bestrahlung bei Raumtemperatur 15 Tage gelagert. Dabei tritt kein Anzeichen von Ablösung oder Blasenbildung auf. Anschliessend wird die Probe bei 705°C 3 Minuten eingebrannt. Die gebildete Glasur unterscheidet sich im Aussehen nicht von der Probe, die gleich nach der Bestrahlung eingebrannt wurde.

Beispiel 5:

Die Ueberzugsmasse Nr. 3 des Beispiels 3 wird auf Lagerstabilität untersucht. Dazu wird die Brookfield-Viskosität gemessen unter Benutzung einer Spindel Nr. 7 bei 24°C und 20 U/min. Die Anfangsviskosität von 2000 Centipoise ändert sich nicht während 33 Tagen Lagerung bei 24°C.

Die Ueberzugsmasse Nr. 1 des Beispiels 3 wird 40 Tage in einem Ofen von 38°C gelagert. Dabei zeigen sich keine Anzeichen von Verfestigung durch Polymerisation des Bindemittels.

Beispiel 6:

Analog Beispiel 1 und 2 werden folgende Bindemittelgemische bereitet:

| Komponente | Teile | | | | | | |
|---|---|---|---|---|---|---|---|
| | Nr. 5 | Nr. 6 | Nr. 7 | Nr. 8 | Nr. 9 | Nr. 10 | Nr. 11 |
| (1) | 15,94 | 14,93 | 21,00 | 14,93 | 11,94 | 20,00 | 15,00 |
| (2) | 4,98 | 4,98 | 5,00 | 4,98 | 3,98 | 20,00 | 17,00 |
| (3) | 46,77 | 46,77 | 41,99 | 45,16 | 56,51 | 45,26 | 45,26 |
| (4) | 18,26 | 19,23 | 20,34 | 10,17 | 16,19 | 2,00 | 10,00 |
| (5) | 4,03 | 4,03 | 3,34 | 4,03 | 3,22 | 3,63 | 3,63 |
| (6) | 2,51 | 2,51 | 1,66 | 2,51 | 2,02 | 2,26 | 2,26 |
| (7) | 7,06 | 7,06 | 6,67 | 7,06 | 5,65 | 6,35 | 6,35 |
| (8) | 0,50 | 0,50 | -- | 0,50 | 0,50 | 0,50 | 0,50 |
| (10) *) | -- | -- | -- | 10,17 | -- | -- | -- |

*) (10) = Trifunktionelles Acrylat-Monomer (Sartomer® 368, Sartomer Corp.)

Diese Bindemittel werden wie in Beispiel 3 beschrieben mit einer schwarzen Glasfritte im Verhältnis 1:4 gemischt, auf Glasplatten aufgebracht, unter verschiedenen Bestrahlungszeiten gehärtet und 3 Minuten bei 705°C eingebrannt. Die Proben werden wie in Beispiel 3 beurteilt.

| Bindemittel Nr. | 5 | 6 | 7 | 8 | 9 | 10 | 11 |
|---|---|---|---|---|---|---|---|
| Fliesseigenschaft | s.g. | s.g. | s.g. | s.g. | s.g. | s.g. | s.g. |
| Härtung | | | | | | | |
| bei 0,6 m/min | s.g. | s.g. | s.g. | s.g. | s.g. | s.g. | -- |
| bei 1,2 m/min | s.g. | s.g. | s.g. | s.g. | s.g. | Bruch | s.g. |
| bei 1,8 m/min | s.g. | s.g. | s.g. | s.g. | -- | -- | -- |
| Lochbildung | keine | keine | keine | keine | keine | keine | keine |
| Ausbrennen des Bindemittels | kompl. | kompl. | koml. | kompl. | kompl. | kompl. | kompl. |
| Ueberdruckbarkeit | gut | gut | gut | gut | gut | gut | gut |
| Vergrauung | ja | mässig | leicht | mässig | mässig | keine | leicht |

Die Bereitung der Ueberzugsmasse Nr. 11 wird wiederholt, jedoch in einer Atmosphäre von >90 % relativer Feuchtigkeit. Die damit hergestellte Glasur unterscheidet sich nicht von der Standardprobe. Dies zeigt, dass die erfindungsgemässen Systeme nicht feuchtigkeitsempfindlich sind.

Zusammenfassung kann gesagt werden, dass die Erfindung verbesserte UV-härtbare Bindemittel und daraus hergestellte Emaillen schafft. Die Prozeduren, Zusammensetzungen und Komponenten der Beispiele können variiert werden im Rahmen der im folgeden aufgeführten Patentansprüche.

**Patentansprüche**

1. Ein UV-härtbares Bindemittel für keramische Ueberzüge, enthaltend
   (a) mindestens zwei photopolymerisierbare flüssige Oligomere, die funktionelle Acrylat- oder Methacrylat-Endgruppen enthalten und wovon mindestens eines ein di- oder trifunktionelles Polyester-acrylat oder -methacrylat ist und mindestens eines ein di- oder trifunktionelles Polyurethan-acrylat oder -methacrylat ist;
(b) mindestens ein monomeres Monoacrylat oder Monomethacrylat;
(c) mindestens ein aliphatisches Pentaacrylat oder Pentamethacrylat;
(d) eine wirksame Menge eines Photoinitiatorsystems aus einem substituierten Thioxanthon, einer Aminverbindung und einem Acetophenon-Derivat.

2. UV-Härtbares Bindemittel gemäss Anspruch 1, worin die Komponente (a) ein Gemisch ist aus einem di- oder trifunktionellen Polyester-acrylat und einem di- oder trifunktionellen Polyurethan-acrylat und die Komponente (d) ein Gemisch ist aus einem substituierten Thioxanthon, einem Ester einer Aminobenzoesäure und einer 2-Phenylacetophenon-Verbindung.

3. UV-Härtbares Bindemittel gemäss Anspruch 1, enthaltend in Gewichtsprozenten 1-25 % Polyester-acrylat, 1-25 % Polyurethan-acrylat, 10-50 % der Komponente (b), 1-35 % der Komponente (c), 0,5-5 % eines substituierten Thioxanthons, 0,5-5 % eines Esters einer Aminobenzosäure und 0,5-15 % einer 2-Phenylacetophenon-Verbindung.

4. UV-Härtbares Bindemittel gemäss Anspruch 1, worin die Komponente (a) ein Gemisch ist aus einem di- oder trifunktionellen Polyester-acrylat und einem di- oder trifunktionellen Polyurethanacrylat, Komponente (b) 2-Phenoxyethyl-acrylat ist, Komponente (c) Dipentaerythrit-pentaacrylat ist und Komponente (d) ein Gemisch ist aus 2-Isopropylthioxanthon, Ethyl-4-dimethylaminobenzoat und 2,2-Dimethoxy-2-phenylacetophenon.

5. UV-Härtbares Bindemittel gemäss Anspruch 1, das bis zu 5 Gew.-% eines Verlaufshilfsmittels enthält.

6. Bindemittel gemäss Anspruch 5, worin das Verlaufshilfsmittel ein Polybuten ist.

7. Eine UV-härtbare Ueberzugsmasse, enthaltend ein Bindemittel entsprechend Anspruch 1 und eine Glas-Emaille bei einem Gewichtsverhältnis von 1:2-5,5.

8. Ueberzugsmasse gemäss Anspruch 7, worin die Glas-Emaille ein Gemisch von Metalloxiden enthält.

9. Ueberzugsmasse gemäss Anspruch 7 bei einem Gewichtsverhältnis von 1:4.

10. Ueberzugsmasse gemäss Anspruch 7, worin das Bindemittel als Komponente (a) ein Gemisch aus einem di- oder trifunktionellen Polyester-acrylat und einem di- oder trifunktionellen Polymethan-acrylat, als Komponente (b) 2-Phenoxyethyl-acrylat, als Komponente (c) Dipentaerythrit-pentaacrylat und als Komponente (d) ein Gemisch von 2-Isopropylthioxanthon, Ethyl-4-dimethylaminobenzoat und 2,2-Dimethoxy-2-phenylacetophenon enthält.

11. Verfahren zum Beschichten eines hitzebeständigen Substrates mit einer keramischen Glasur, bestehend aus den Verfahrensschritten
(1) Auftrag der in Anspruch 7 definierten Ueberzugsmasse auf das hitzebeständige Substrat,
(2) Härtung des Ueberzuges durch UV-Bestrahlung und
(3) Einbrennen des beschichteten Substrates bei einer Temperatur, die ausreicht um das Bindemittel abzubrennen und die Emaille auf das Substrat aufschmelzen zu lassen.

12. Verfahren gemäss Anspruch 11, worin die Ueberzugsmasse ein Bindemittel enthält bestehend aus (a) einem Gemisch aus einem di- oder trifunktionellen Polyester-acrylat und einem di- oder trifunktionellen Polyurethan-acrylat; (b) 2-Phenoxyethyl-acrylat; (c) Dipentaerythrit-pentaacrylat und (d) einem Gemisch aus 2-Isopropylthioxanthon, Ethyl-4-dimethylaminobenzoat und 2,2-Dimethoxy-2-phenylacetophenon.

13. Verfahren gemäss Anspruch 11, bestehend aus den Verfahrensschritten
(1) Auftrag der in Anspruch 7 definierten Ueberzugsmasse auf das hitzbeständige Substrat.
(2) Härtung des Ueberzuges durch UV-Bestrahlung,
(3) Auftrag einer zweiten Ueberzugsmasse bestehend aus einer niedrigschmelzenden Glasfritte, einem elektrisch leitfähigen Metallpulver und einem harzigen Bindemittel und
(4) Einbrennen beider Schichten bei einer Temperatur, die ausreicht um die Bindemittel zu verbrennen und die Emaille auf das Substrat aufschmelzen zu lassen, sodass dabei eine elektrisch leitfähige Oberschicht entsteht.

**Claims**

1. A UV-curable binder for ceramic coatings comprising
   (a) at least two photopolymerizable liquid oligomers containing acrylate or methacrylate functional end groups, at least one of which is a difunctional or trifunctional polyester acrylate or methacrylate and at least one of which is a difunctional or trifunctional polyurethane acrylate or methacrylate;
   (b) at least one monomeric monoacrylate or monomethacrylate;
   (c) at least one aliphatic pentaacrylate or pentamethacrylate; and
   (d) an effective amount of a photoinitiator system comprising a substituted thioxanthone, an amine compound and an acetophenone derivative.

2. A UV-curable binder according to claim 1, in which component (a) is a blend of a difunctional or trifunctional polyester acrylate and a difunctional or trifunctional polyurethane acrylate, and component (d) is a blend of a substituted thioxanthone, an ester of an aminobenzoic acid and a 2-phenylacetophenone compound.

3. A UV-curable binder according to claim 1, which comprises in weight percentages, 1-25 % polyester acrylate, 1-25 % polyurethane acrylate, 10-50 % component (b), 1-35 % component (c), 0.5-5 % of a substituted thioxanthone, 0.5-5 % of an ester of an aminobenzoic acid and 0.5-15 % of a 2-phenylacetophenone compound.

4. A UV-curable binder according to claim 1, in which component (a) is a blend of a difunctional or trifunctional polyester acrylate and a difunctional or trifunctional polyurethane acrylate, component (b) is 2-phenoxyethyl acrylate, component (c) is dipentaerythritol pentaacrylate, and component (d) is a blend of 2-isopropylthioxanthone, ethyl 4-dimethylaminobenzoate and 2,2-dimethoxy-2-phenylacetophenone.

5. A UV-curable binder according to claim 1 which contains up to 5 % by weight of a flow promoter.

6. A binder according to claim 5, in which the flow promoter is a polybutene.

7. A UV-curable coating composition comprising a binder according to claim 1 and a glass enamel in a weight ratio ranging from 1:2 to 1:5.5.

8. A coating composition according to claim 7, in which the glass enamel comprises a mixture of metal oxides.

9. A coating composition according to claim 7, in a weight ratio of 1:4.

10. A coating composition according to claim 7, in which the binder comprises as component (a) a blend of a difunctional or trifunctional polyester acrylate and a difunctional or trifunctional polyurethane acrylate, as component (b) 2-phenoxyethyl acrylate, as component (c) dipentaerythritol pentaacrylate, and as component (d) a blend of 2-isopropylthioxanthone, ethyl 4-dimethylaminobenzoate and 2,2-dimethoxy-2-phenylacetophenone.

11. A process for coating a heat resistant substrate with a ceramic glaze, comprising
    (1) applying a coating composition as defined in claim 7 to the heat resistant substrate,
    (2) curing the coating by UV-irradiation and
    (3) firing the coated substrate at a temperature sufficient to burn off the binder and fuse the enamel to the substrate.

12. A process according to claim 11, in which the coating composition contains a binder comprising (a) a blend of a difunctional or trifunctional polyester acrylate and a difunctional or trifunctional polyurethane acrylate; (b) 2-phenoxyethyl acrylate; (c) dipentaerythritol pentaacrylate and (d) a blend of 2-isopropylthioxanthone, ethyl 4-dimethylaminobenzoate and 2,2-dimethoxy-2-phenylacetophenone.

13. A process according to claim 11 comprising
    (1) applying a coating composition as defined in claim 7 to the heat resistant substrate,
    (2) curing the coating by UV-irradiation,
    (3) applying a second coating composition comprising a low-melting glass frit, an electrically conductive metal powder and a resinous binder and
    (4) firing both layers at a temperature sufficient to burn off the binders and fuse the enamel to the substrate so as to provide an electrically conductive upper layer.

## Revendications

1. Un liant durcissable à l'ultra-violet pour revêtements céramiques, qui comprend :

    a) au moins deux oligomères liquides photopolymérisables à groupes terminaux fonctionnels d'acrylate ou de méthacrylate, dont l'un au moins est un polyester acrylique ou méthacrylique difonctionnel ou trifonctionnel et l'un au moins un acrylate ou méthacrylate de polyuréthane difonctionnel ou trifonctionnel ;

    b) un ou plusieurs monoacrylates ou monométhacrylates monomères ;

    c) un ou plusieurs penta-acrylates ou pentaméthacrylates aliphatiques ;

    d) une proportion efficace d'un système photo-inducteur formé d'une thioxanthone substituée, d'un composé aminé et d'un dérivé d'acétophénone.

2. Liant durcissable à l'ultra-violet selon la revendication 1, dont le composant (a) est un mélange d'un polyester acrylique di- ou trifonctionnel et d'un polyuréthane-acrylate di- ou trifonctionnel et le composant (d) un mélange d'une thioxanthone substituée, d'un ester d'un acide aminobenzoïque et d'une 2-phénylacétophénone.

3. Liant selon la revendication 1 contenant, en proportions pondérales, 1-25% du polyester acrylique, 1-25% du polyuréthane-acrylate, 10-50% du composant (b), 1-35% du composé (c), 0,5-5% de la thioxanthone, 0,5-5% d'un ester d'acide aminobenzoïque et 0,5-15% de 2-phénylacétophénone.

4. Liant selon la revendication 1 dont le composant (a) est un mélange d'un polyester acrylique di- ou trifonctionnel et d'un polyuréthane-acrylate di- ou trifonctionnel, le composant (b) est de l'acrylate de 2-phénoxyéthyle, le composant (c) du penta-acrylate de dipentaérythritol et le composant (d) un mélange de 2-isopropylthioxanthone, de 4-diméthylaminobenzoate d'éthyle et de 2,2-diméthoxy-2-phénylacétophénone.

5. Liant selon la revendication 1 contenant jusqu'à 5% en poids d'un agent d'écoulement.

6. Liant selon revendication la 5 dans lequel l'agent d'écoulement est un polybutène.

7. Un produit de revêtement durcissable à l'ultra-violet qui comprend un liant selon l'une quelconque des revendications précédentes avec un émail de verre dans un rapport pondéral 1:2-5,5.

8. Produit de revêtement selon la revendication 7 dont l'émail de verre est un mélange d'oxydes de métaux.

9. Produit de revêtement selon la revendication 7 dans le rapport pondéral 1:4.

10. Produit de revêtement selon la revendication 7, dont le liant comprend comme composant (a) un mélange d'un polyester acrylique di- ou trifonctionnel et d'un polyuréthane-acrylate di- ou trifonctionnel, comme composant (b) de l'acrylate de 2-phénoxyéthyle, comme composant (c) du penta-acrylate de dipentaérythritol et comme composant (d) un mélange de 2-isopropylthioxanthone, de 4-diméthylaminobenzoate d'éthyle et de 2,2-diméthoxy-2-phénylacétophénone.

11. Procédé de revêtement d'un substrat résistant à la chaleur d'une glaçure céramique, procédé qui comprend les opérations suivantes :

    1) on applique sur le substrat le produit de revêtement tel que défini dans la revendication 7,

    2) on durcit le revêtement en l'exposant à un rayonnement ultra-violet, et

    3) on cuit le substrat recouvert à une température suffisante pour faire brûler totalement le liant et faire fondre l'émail sur le substrat.

12. Procédé selon la revendication 11 dans lequel le produit de revêtement contient un liant formé (a) d'un mélange d'un polyester acrylique di- ou trifonctionnel et d'un polyuréthane-acrylate di- ou trifonctionnel ; (b) d'acrylate de 2-phénoxyéthyle ; (c) de penta-acrylate de dipentaérythritol et (d) d'un mélange de 2-isopropylthioxanthone, de 4-diméthylaminobenzoate d'éthyle et de 2,2-diméthoxy-2-phénylacétophénone.

13. Procédé selon la revendication 11 qui comprend les opérations suivantes :

    1) on applique sur le substrat résistant à la chaleur le produit de revêtement défini à la revendication 7,

    2) on durcit le revêtement appliqué en l'exposant à un rayonnement ultra-violet,

3) on applique sur ce revêtement un second produit de revêtement formé d'une fritte de verre à bas point de fusion, d'une poudre de métal électroconductrice et d'un liant résineux, et

4) on cuit les deux couches ensemble à une température suffisante pour faire brûler le liant totalement et faire fondre l'émail sur le substrat, de manière à former sur celui-ci une couche de surface électro-conductrice.